Europäisches Patentamt

**European Patent Office**

**Office européen des brevets**

(11) Numéro de publication: **0 203 010**

**A1**

(12) **DEMANDE DE BREVET EUROPEEN**

(21) Numéro de dépôt: **86401090.5**

(22) Date de dépôt: **23.05.86**

(51) Int. Cl.⁴: **G01B 11/02 , G01B 11/04**

(30) Priorité: **24.05.85 FR 8507859**

(43) Date de publication de la demande:
**26.11.86 Bulletin 86/48**

(84) Etats contractants désignés:
**AT BE CH DE GB IT LI LU NL SE**

(71) Demandeur: **CENTRE TECHNIQUE DU BOIS ET DE L'AMEUBLEMENT**
**10 avenue Saint-Mandé**
**F-75012 Paris(FR)**

(72) Inventeur: **Delahaye, Patrick P.**
**15 Boulevard Picpus**
**F-75012 Paris(FR)**
Inventeur: **Labetoulle, Thierry**
**2 rue Planchat**
**F-75020 Paris(FR)**

(74) Mandataire: **Thevenet, Jean-Bruno et al**
**Cabinet BEAU DE LOMENIE 55 rue d'Amsterdam**
**F-75008 Paris(FR)**

(54) **Dispositif automatique de mesure sans contact des dimensions d'une pièce parallélépipédique.**

(57) Le dispositif comprend un premier transporteur - (1); un premier détecteur optique statique (3,4); une station de mesure de largeur (10) avec un réflecteur (17) disposé perpendiculairement au premier transporteur (1) à la suite de celui-ci, et sous le trajet de la pièce à mesurer (31), une cellule optique de mesure (16) montée sur un coulisseau (14) déplaçable parallèlement au réflecteur (17) au-dessus du trajet de la pièce à mesurer, un codeur de largeur (100) associé au coulisseau (16); un second transporteur (2) placé en aval de la station de mesure de largeur (10), et un capteur de longueur (20) comprenant un organe (23) de mesure de la vitesse du premier ou du second transporteur (1,2).

Le dispositif s'applique en particulier au contrôle dimensionnel de pièces de bois.

EP 0 203 010 A1

## Dispositif automatique de mesure sans contact des dimensions d'une pièce parallélépipédique.

La présente invention se rapporte au domaine des capteurs de saisie de géométrie et concerne plus particulièrement un dispositif automatique de mesure sans contact des dimensions d'une pièce parallélépipédique, notamment d'une pièce de bois telle qu'un avivé, comprenant :

-un premier transporteur à bande pour amener individuellement à une station de mesure de largeur une pièce parallélépipédique placée à plat avec ses arêtes parallèles à la direction d'avancement dudit premier transporteur,

-un détecteur optique placé à proximité de la station de mesure de largeur pour détecter le passage d'une pièce à mesurer sur le premier transporteur en défilement, et

-une station de mesure de largeur.

On a déjà réalisé la mesure et le contrôle de dimensions par capteurs sans contact, notamment de type optique, dans différents secteurs industriels. Ces mesures de dimensions font cependant en général appel à des installations complexes et coûteuses ou peu aisées à mettre en place sur des chaînes existantes. Dans l'industrie du bois, les mesures de longueur sont le plus souvent réalisées par des dispositifs du type roulette avec compteur, c'est-à-dire impliquent un contact avec la pièce à mesurer.

L'invention vise à remédier aux inconvénients de l'art antérieur et à permettre de réaliser de façon simple, rapide, et automatique, au sein même d'une chaîne de traitement, une mesure ou un contrôle des dimensions géométriques d'une pièce parallélépipédique même de relativement grandes dimensions, sans qu'aucun capteur soit directement en contact avec la pièce à mesurer.

Ces buts sont atteints grâce à un dispositif de mesure tel que défini en tête de la description caractérisé en ce que : la station de mesure de largeur comprend un réflecteur disposé perpendiculairement au premier transporteur, à la suite de celui-ci, et sous le trajet de la pièce à mesurer, une cellule de mesure sensible à la lumière réfléchie par le réflecteur et montée sur un coulisseau déplaçable parallèlement au réflecteur au-dessus du trajet de la pièce à mesurer, un codeur de largeur associé au coulisseau portant la cellule de mesure pour déterminer à chaque instant la position du coulisseau et de la cellule de mesure et des moyens d'inhibition pour n'autoriser la prise en compte des informations émises par le codeur de largeur que lorsque la cellule de mesure détecte une modification de la lumière reçue du réflecteur, due à la présence d'une pièce au niveau de la station de mesure de largeur.

Un second transporteur à bande synchronisé avec le premier transporteur pour évacuer la pièce à mesurer après le passage de celle-ci à la station de mesure de largeur.

Un capteur de longueur comprenant un organe de mesure du défilement du premier ou du second transporteur et des moyens de commande dudit organe de mesure du défilement pour n'autoriser la prise en compte des informations fournies par l'organe de mesure de défilement que lorsque le passage d'une pièce à mesurer est détecté par ledit détecteur optique de passage.

Des moyens d'acquisition et de traitement des informations fournies par le détecteur de passage d'une pièce à mesurer, par la cellule de mesure, par le codeur de largeur et par le capteur de longueur, pour déterminer les dimensions géométriques en largeur et en longueur de la pièce à mesurer.

Si une mesure ou un contrôle en trois dimensions est nécessaire, le dispositif comprend en outre un capteur optique de mesure d'épaisseur disposé au voisinage de la station de mesure de largeur, transversalement par rapport à la direction de défilement des transporteurs à bande.

Selon un mode particulier de réalisation, le coulisseau portant la cellule de mesure est guidé le long d'un rail de guidage perpendiculaire aux transporteurs à bande et est entraîné en mouvement à l'aide d'un vérin commandé par le détecteur optique de passage, et le codeur de largeur comprend un codeur incrémental angulaire dont l'arbre de rotation est solidaire d'un pignon en prise avec une crémaillère solidaire du coulisseau.

Selon une autre caractéristique de l'invention, ledit organe de mesure de défilement comprend une roue reposant sur la bande de l'un des transporteurs à bande et un codeur incrémental dont l'arbre de rotation est solidaire de ladite roue, le codeur et la roue étant supportés par un bras articulé sur une console fixe.

Avantageusement, les premier et second transporteurs à bande comportent une bande commune qui est déviée sous le réflecteur de la station de mesure de largeur par des rouleaux.

D'autres caractéristiques et avantages de l'invention ressortiront de la description suivante d'un mode particulier de réalisation, donné à titre d'exemple, en référence aux dessins annexés, sur lesquels:

-la figure 1 est une vue schématique en perspective d'un dispositif de mesure de pièces parallélépipédiques conformément à l'invention,

-la figure 2 est une vue partielle de dessus du dispositif de la figure 1,

-les figures 3 à 5 sont des vues de côté, de dessus et de devant, avec arrachement partiel, d'un exemple de capteur de longueur utilisable dans le dispositif de la figure 1,

-les figures 6 et 7 sont des vues en coupe selon les lignes VI-VI et VII-VII des figures 7 et 6 respectivement, montrant un exemple de station de mesure de largeur pouvant être incorporée dans le dispositif des figures 1 et 2, et

-les figures 8 et 9 sont des schémas synoptiques des circuits de traitement électronique associés au dispositif des figures 1 et 2.

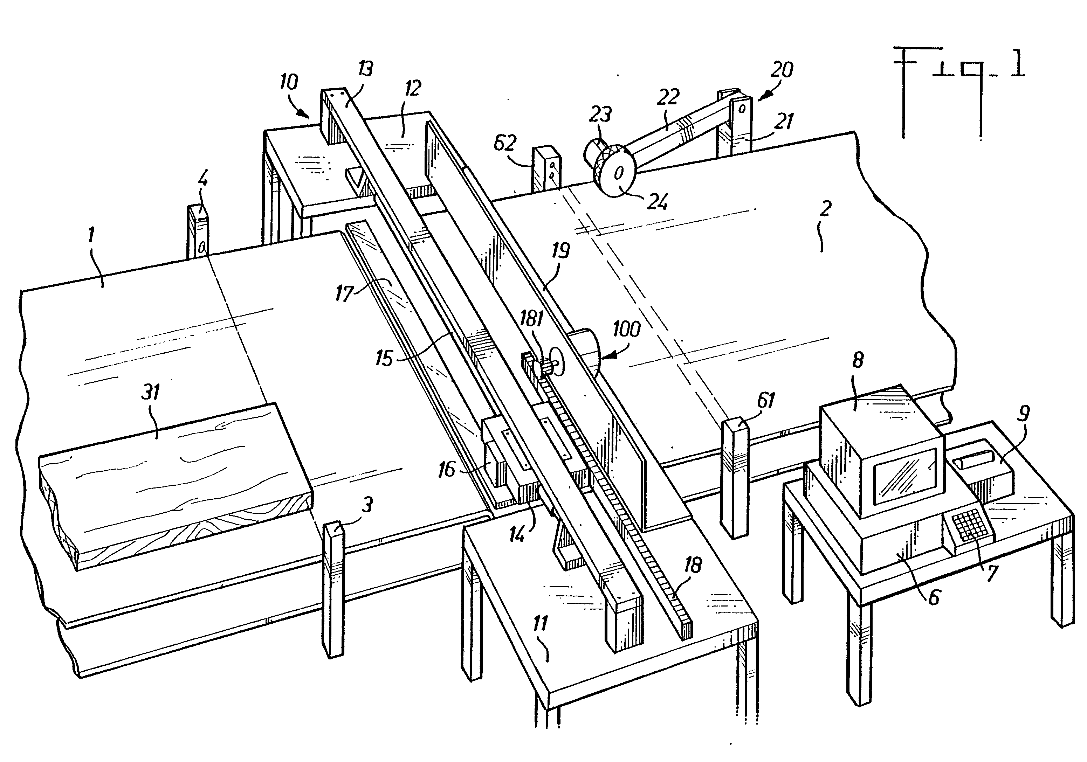

Le dispositif représenté sur la figure 1 permet de mesurer la largeur, de mesurer ou contrôler la longueur et, le cas échéant, l'épaisseur, d'une pièce parallèlépipédique notamment en bois de section carrée ou rectangulaire, telle qu'un plot ou un avivé 31.

Ce dispositif peut être appliqué en particulier à la réalisation d'un tri en longueur de pièces parallélépipédiques et au calcul de la surface cumulée des pièces produites pour chaque classe de longueur, à partir de la détermination de la largeur de chaque pièce sur une section de la pièce.

Le dispositif représenté sur la figure 1 comprend essentiellement un premier transporteur à bande 1 placé en amont d'une station 10 de mesure de largeur, un second transporteur à bande 2 placé en aval de la station 10 de mesure de largeur et synchronisé avec le mouvement de premier transporteur 1, un détecteur 3,4 de passage d'une pièce à mesurer 31 à l'entrée de la station de mesure de largeur 10, un détecteur 61,62 d'épaisseur de pièce disposée à la sortie de la station de mesure de largeur 10, un dispositif 20 de mesure du défilement du transporteur 2, et un ensemble 6 à 9 de commande et de traitement des signaux émis par le détecteur 3,4 de passage de pièce, le détecteur 61,62 de mesure d'épaisseur, la station 10 de mesure de largeur et le dispositif 20 de mesure de défilement du transporteur 2.

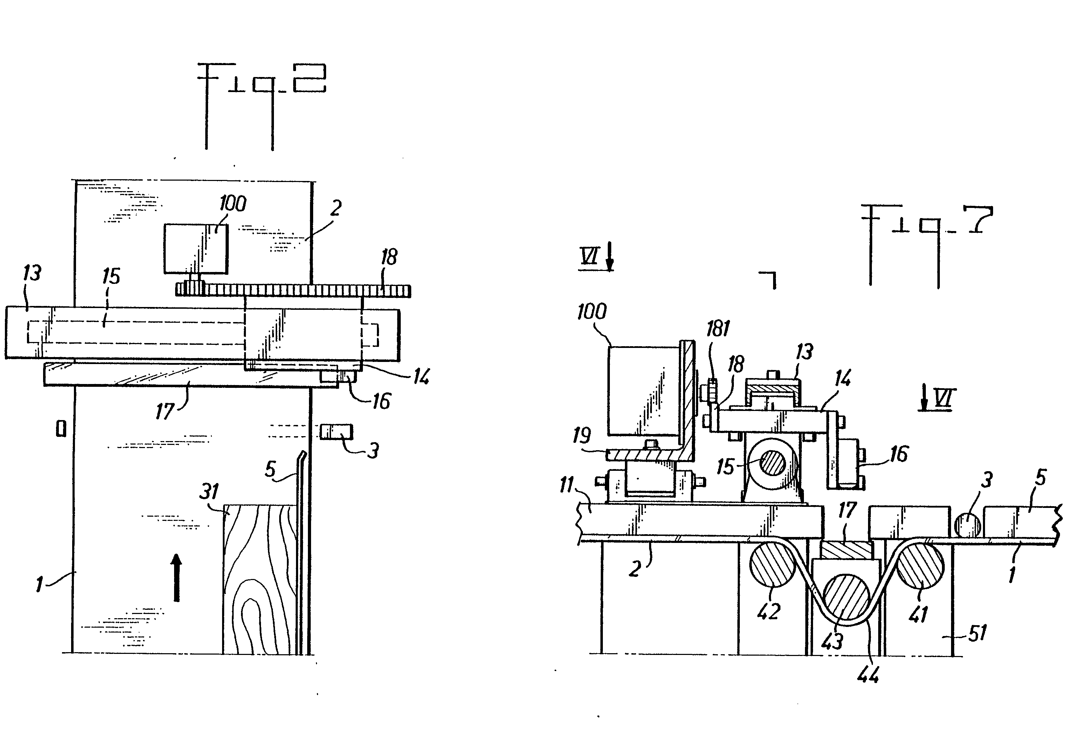

Le détecteur 3,4 de passage de pièces à mesurer 31 peut comprendre une cellule photoélectrique 4 associée à une émetteur 3 produisant un faisceau faisceau lumineux perpendiculaire au sens d'avancement du tapis du transporteur 1 et à faible distance au-dessus du niveau de ce tapis. Par suite, la cellule 4 détecte l'arrivée d'une pièce 31 au voisinage de l'entrée de la station 10 de mesure de largeur et revient à son étant initial lorsque la pièce 31 a terminé son passage en regard du faisceau émis par l'émetteur 3. Chaque pièce 31 est guidée longitudinalement parallèlement à la direction d'avancement du transporteur l à l'aide d'un rail latéral 5 qui borde le tapis du transporteur 1 (figure 2).

La station 10 de mesure de largeur comprend un bâti 11,12 situé de part et d'autre des transporteurs à bande 1 et 2. Un guide linéaire 13 est fixé aux deux parties latérales 11,12 du bâti de part et d'autre du transporteur 1 et s'étend en forme de pont à une certaine hauteur au-dessus du niveau du tapis transporteur 1, perpendiculairement à la direction longitudinale du transporteur 1, et à l'avant de celui-ci.

Un coulisseau 14 supportant une cellule photoélectrique 16 est monté de manière à pouvoir coulisser le long du guide linéaire 13. Le coulisseau 14, qui est suspendu au guide 13, est solidaire d'une tige de vérin 15 qui provoque le déplacement du coulisseau 14 lorsque le détecteur 3,4 a détecté l'arrivée d'une pièce à mesurer 31. La cellule photoélectrique 16 portée par le coulisseau 14 est dirigée vers le bas et fait face à un réflecteur 17 situé devant le transporteur 1, perpendiculairement à celui-ci et légèrement en dessous du plan du tapis du transporteur 1. Lorsque le coulisseau solidaire de la tige de vérin 15 se déplace le long du guide linéaire 13, la cellule 16 reste en regard du réflecteur 17. Toutefois, lorsqu'une pièce 31 est parvenue à l'extrémité du transporteur 1, le réflecteur 17 est recouvert par la pièce 31 et la lumière n'est plus réfléchie par le réflecteur 17 sur une distance qui correspond à la largeur de la pièce 31. La cellule 16 qui a été mise en mouvement avec le coulisseau 14 lors du passage de la pièce 31 au niveau du détecteur 3,4 détecte ainsi, lors de la course du coulisseau 14, un changement d'état sur une distance qui correspond à la largeur de la pièce 31.

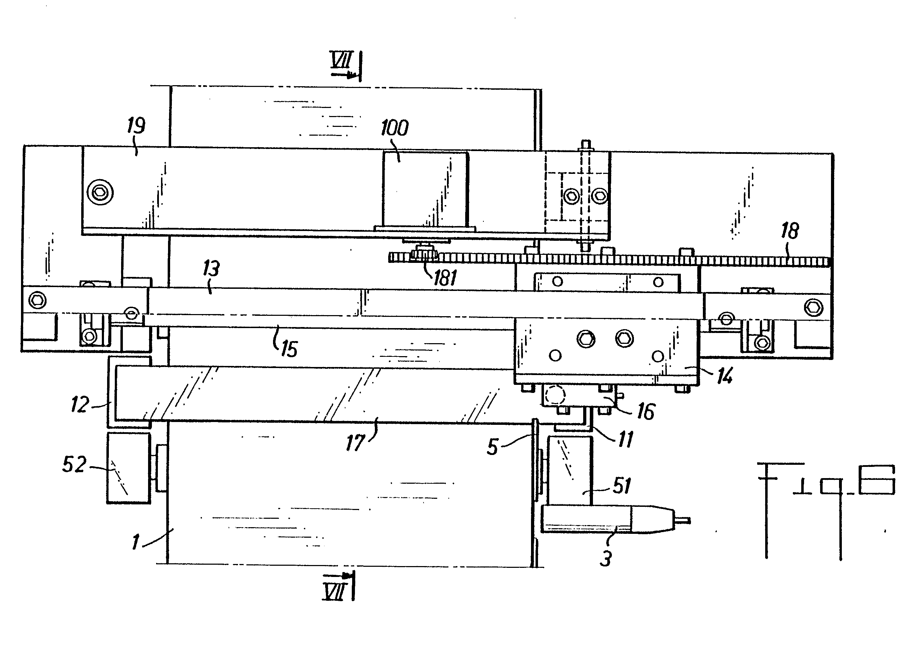

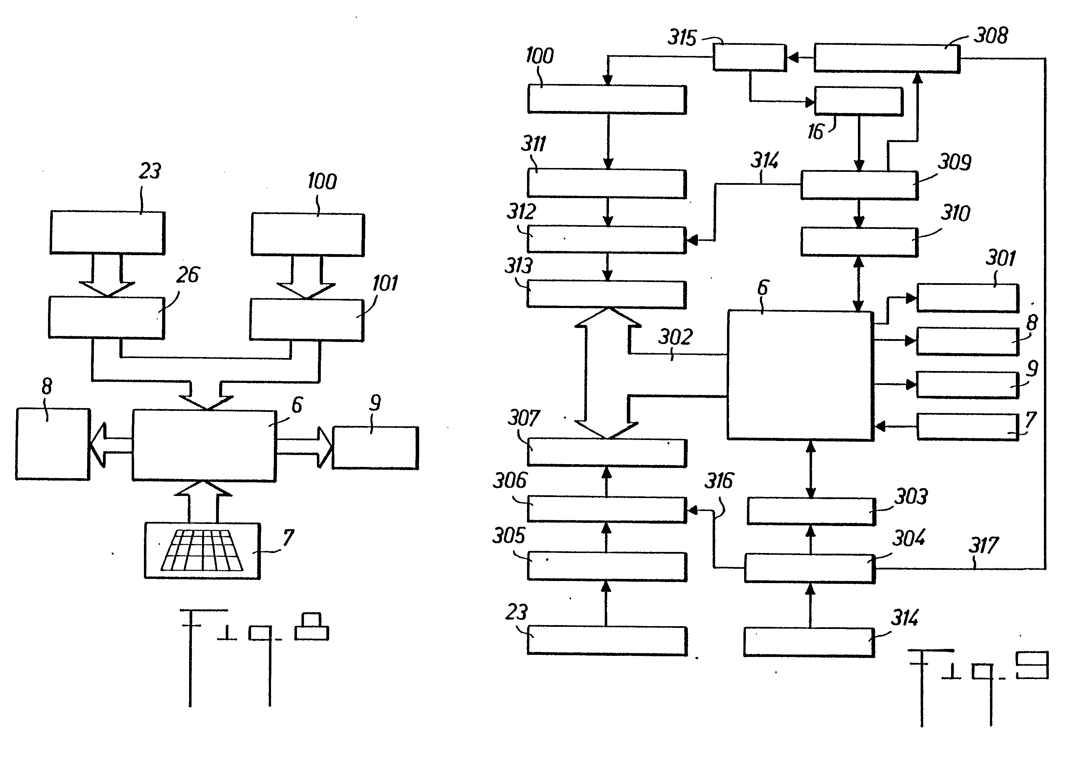

Une crémaillère 18 est solidaire du coulisseau 14 et se déplace avec celui-ci. Un codeur angulaire incrémental 100 est monté à poste fixe sur un support 19 monté sur le bâti 11, 12 et présente un arbre de sortie solidaire d'un pignon 181 qui est en prise avec la crémaillère 18 (Fig 1,2,6 et 7). Le codeur incrémental 100 délivre des impulsions qui sont fonction de la rotation du pignon 181, et donc fonction de la position de la crémaillère 18, du coulisseau 14 et de la cellule 16. Ces impulsions ne sont toutefois prises en compte que lorsque la cellule 16 détecte la présence d'une pièce 31 entre le réflecteur 17 et l'ensemble porte-cellule 16, de sorte que la station 10 permet de fournir un signal représentatif de la largeur de la pièce à mesurer 31.

Après être passée sur le réflecteur 17, la pièce 31 vient reposer sur le tapis du second transporteur à bande 2 dont la vitesse est synchronisée avec celle du premier transporteur à bande 1. Comme on peut le voir sur la figure 7, les tapis des transporteurs à bande 1 et 2 sont avantageusement constitués par une bande unique entraînée en mouvement par une mécanisme unique et simplement déviée vers le bas par des rouleaux de renvoi 41, 42, 43 au niveau du réflecteur 17 pour passer sous ce dernier. La mise en oeuvre d'une bande unique pour les parties de transporteur 1 et 2 situées en amont et en aval de la station de mesure de largeur 10 simplifie la réalisation, mais la mise en oeuvre de transporteurs distincts 1 et 2 peut s'avérer préférable lorsque le dispositif de mesure doit être incorporé sur une chaîne de traitement existante. Dans ce cas, les transporteurs 1 et 2 peuvent être constitués par des transporteurs 1 et 2 peuvent être constitués par des transporteurs préexistants de deux étages de traitement successif et il suffit d'installer le détecteur 3, 4 et la station de mesure de largeur 10 entre les deux étages existants.

On notera que la mesure de largeur effectuée au niveau de la station de mesure 10 peut s'effectuer dès lors que les pièces 31 à mesurer se présentent de façon discontinue et perpendiculairement au pont 13 de guidage du coulisseau 14. En revanche, la pièce 31 peut se trouver dans une zone quelconque de la surface balayée par la cellule mobile 16 et non nécessairement le long du guide 5.

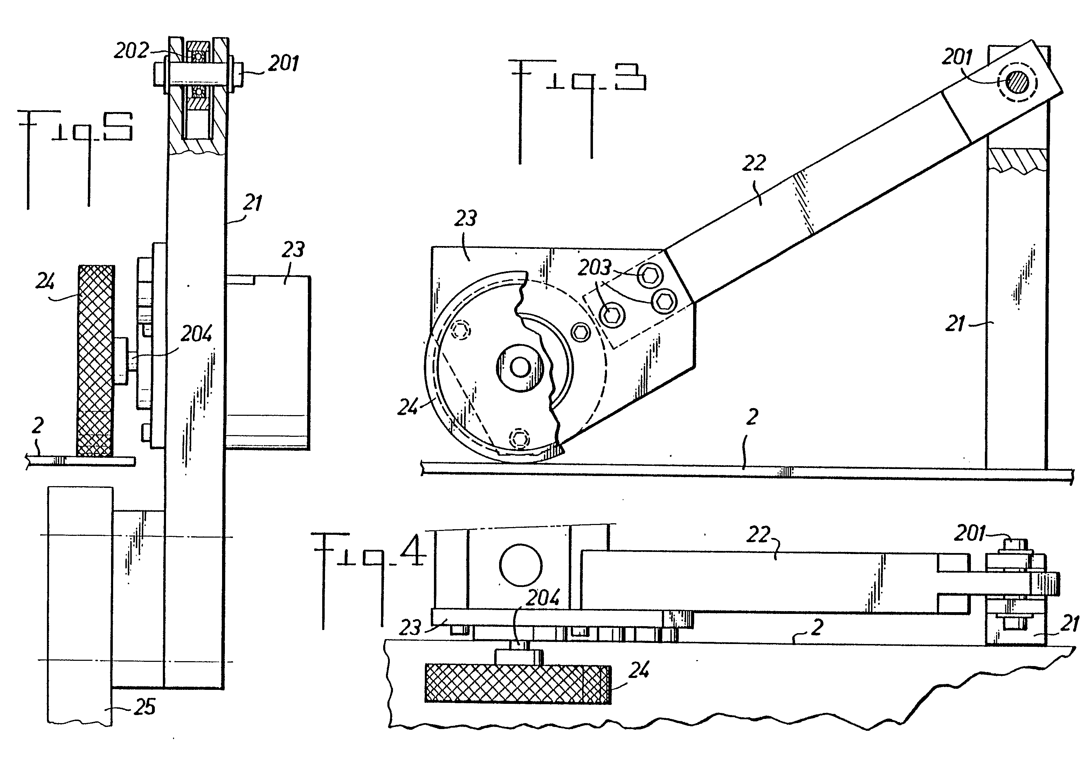

Le contrôle ou la mesure de la longueur des pièces à mesurer 31 sont effectués à partir d'un capteur 20 mesurant le défilement des transporteurs à bande 1 et 2 qui entraînent une pièce 31 en déplacement. Le capteur 20 peut comprendre une roue 24 solidaire de l'axe 204 d'un codeur incrémental angulaire 23 monté à l'extrémité d'un bras 22 articulé, par un axe 201 monté sur un roulement 202, à l'extrémité d'une console 21 fixée à un bâti 25 (voir figures 3 à 5). La roue 24 repose sur le tapis du second transporteur 2, mais pourrait également être disposée de manière à reposer sur le tapis du premier transporteur 1, puisque les deux transporteurs 1 et 2 sont synchronisés. Lors de l'avance du tapis du transporteur 2, la roue 24 est entraînée en rotation par le tapis et entraîne elle-même en rotation l'axe 204 du codeur 23 qui produit des impulsions proportionnelles à la rotation de l'axe 204 et donc au défilement du tapis du transporteur 2. Les signaux délivrés par le codeur 23 ne sont pris en compte que pendant le temps durant lequel le capteur 3,4 détecte la présence d'une pièce 31 à l'entrée de la station de mesure de largeur 10. Dans ces conditions, le signal émis par le codeur 23 représente une information proportionnelle à la longueur de la pièce 31.

Un mesure d'épaisseur de la pièce 31 à mesurer peut également être effectuée soit au niveau du détecteur 3,4 à l'entrée de la station 10 de mesure de largeur, soit à un autre endroit sur le trajet de la pièce 31, par exemple à la sortie de la station 10 de mesure de largeur. La mesure ou le contrôle d'épaisseur peuvent être effectués à l'aide de détecteurs optiques, par exemple un émetteur de lumière 61 produisant un faisceau réparti sur une certaine hauteur au-dessus du plan du tapis du transporteur 2 et un récepteur de lumière 62 constitué par une barrette verticale de cellules photodétectrices. L'émetteur 61 et le récepteur 62 étant situés de part et d'autre du transporteur 2, l'interruption partielle du faisceau lumineux allongé en hauteur, lors du passage d'une pièce à mesurer 31 en regard de l'émetteur 61 et du récepteur 62 permet de déterminer l'épaisseur de la pièce selon le nombre de cellules du récepteur 62 qui ne sont plus excitées.

Pour de nombreuses applications, la mesure d'épaisseur n'est cependant pas indispensable et le dispositif de mesure peut alors se réduire à la présence des ensembles 10 et 20 de mesure de largeur et de longueur, associés au détecteur 3, 4. Dans le cas où une mesure d'épaisseur est effectuée, il est possible de combiner les détecteurs 3,4 et 61, 62.

Le dispositif de mesure selon l'invention peut fonctionner de façon entièrement automatique et les figures 8 et 9 représentent les schémas synoptiques d'un système global de mesure de largeur et de longueur.

La figure 8 montre de façon symbolique les deux branches du traitement effectué. Les informations fournies par le codeur 23 combinées à celles fournies par le détecteur 3, 4 sont appliquées à un sous-ensemble 26 d'acquisition des informations de longueur tandis que les informations fournies par le codeur 100 combinées à celles fournies par la cellule de mesure 16 sont appliquées à un sous-ensemble 101 d'acquisition des informations de largeur. Les sous-ensembles 26 et 101 sont eux-mêmes reliés à une unité centrale de traitement 6 à microprocesseur qui constitue un système informatique gérant les sous-ensembles électroniques 26 et 101 d'acquisition, et exécute les différents calculs nécessaires. Les résultats peuvent être visualisés à l'aide d'un moniteur à tube cathodique 8 ou à l'aide d'une imprimante 9 et un clavier 7 permet l'introduction par l'utilisateur de données ou instructions.

La figure 9 montre de façon plus détaillée le - schéma synoptique de l'ensemble du dispositif de mesure selon l'invention.

Le détecteur 3, 4 de présence de pièce fournit par l'intermédiaire d'un étage 304 d'adaptation du signal des informations à une mémoire 303 de la mesure effectuée, elle-même accessible à partir de l'unité centrale de traitement 6.

Le codeur 23 de mesure de défilement des transporteurs 1, 2 fournit par l'intermédiaire d'un étage 305 d'adaptation du signal des impulsions à un compteur 306 dont le fonctionnement n'est autorisé que lorsqu'il reçoit un signal d'autorisation par la ligne 316 reliée à l'étage d'adaptation du signal 304. Le compteur 306 prend ainsi en compte les signaux issus de l'étage 305 pendant tout le temps où le détecteur 3,4 délivre un signal, c'est-à-dire pendant le seul temps de présence d'une pièce 31 en regard de détecteur 3, 4. Le contenu du compteur 306 est transféré à une mémoire tampon 307 accessible à partir de l'unité centrale 6 par un bus trois états 302.

L'étage 304 d'adaptation du signal est également relié par la ligne 317 à un ensemble 308 de commande d'aller-retour de la tige de vérin 15, lequel ensemble de commande est relié au vérin 315. La cellule de mesure 16 montée sur le coulisseau 14 solidaire de la tige de vérin 15 délivre des signaux qui sont appliqués à un étage d'adaptation de tension 309 relié à une mémoire 310 de la mesure effectuée, accessible depuis l'unité centrale 6. La détection par le détecteur 3, 4 de l'arrivée d'une pièce à mesurer 31 provoque, par la ligne 317, la commande du déplacement de la tige de vérin 15 pour faire balayer par la cellule 16 la largeur de l'étage de mesure de largeur 10.

Les signaux de l'étage 309 d'adaptation de tension associé à la cellule 16 sont également transmis par la ligne 314 à un second compteur 312 relié par une seconde mémoire tampon 313 au bus 302 pour n'autoriser le fonctionnement du compteur 312 que lorsque la cellule 16 détecte la présence d'une pièce à mesurer 31 lors de son mouvement de déplacement transversal le long du guide 13. Le compteur 312 enregistre à partir d'un étage 311 d'adaptation du signal, les signaux émis par le codeur incrémental 100 qui coopère avec la crémaillère 18 solidaire du coulisseau 14 actionné par le vérin 315.

Comme indiqué précédemment, une unité d'affichage 8, une imprimante 9, un clavier 7 et des mémoires mortes 301 de type ROM complètent l'unité centrale 6 pour constituer un système informatique complet.

A titre d'exemple, le dispositif de mesure selon l'invention est adapté à la mesure de pièces de bois parallélépipédiques pouvant présenter une épaisseur comprise entre environ 9 et 30 mm, une largeur comprise entre environ 30 et 200 mm et une longueur comprise entre environ 300 et 4000mm. Pour de telles plages de valeur et avec une vitesse d'avance des transporteurs 1, 2 de 20m/mn, le temps de mesure de la largeur peut être de 0,5 seconde avec une précision de +/- 0,4mm et le temps de mesure de la longueur peut être compris entre 1 et 12 secondes avec une précision de l'ordre de +/- 1 à +/- 2mm. On notera que ces valeurs ne sont données qu'à titre d'exemple et que le dispositif de mesure selon l'invention est adapté à la mesure de pièces dont notamment la longueur peut excéder la valeur de 4 mètres citée plus haut.

La mise en oeuvre d'un dispositif de mesure automatique des dimensions de pièces parallélépipédiques en défilement permet de réaliser un certain nombre de fonctions, grâce au système informatique associé, et notamment :

-de mesurer, par longueur, la largeur des pièces en mouvement;

-d'afficher en permanence la largeur développée cumulée par longueur;

-d'informer, à l'affichage, lorsque la largeur développée cumulée atteint la largeur développée fixée comme objectif;

-de conserver en mémoire, les largeurs développées par longueur et épaisseur pour le lancement en cours;

-de restituer, en fin de lancement sur listing, par longueur, les informations suivantes:

. nombre de pièces,

. largeur développée cumulée,

. volume,

. mètre linéaire (nombre de pièces x classe de longueur).

Bien entendu diverses modifications et adjonctions peuvent être apportées à l'invention. Par exemple, bien que l'on ait représenté sur les figures 1, 2 et 6,7 un système de mesure de largeur avec une crémaillère 18 solidaire du coulisseau 14 et un codeur incrémental 100 monté à poste fixe, on pourrait envisager l'utilisation d'un codeur 100 solidaire du coulisseau 14 et coopérant avec une crémaillère 18 fixe. Par ailleurs, d'autres moyens de transformation d'un mouvement linéaire en un mouvement rotatif pourraient être utilisés, bien que la mise en oeuvre d'un système pignon-crémaillère soit particulièrement simple et commode.

**Revendications**

1. Dispositif automatique de mesure sans contact des dimensions d'une pièce parallélépipédique, notamment d'une pièce de bois telle qu'un avivé, comprenant:

-un premier transporteur à bande (1) pour amener individuellement à une station de mesure de largeur (10) une pièce parallélépipédique (31) placée à plat avec ses arêtes parallèles à la direction d'avancement dudit premier transporteur (1),

-un détecteur optique (3,4) placé à proximité de la station de mesure de largeur (10) pour détecter le passage d'une pièce à mesurer (31) sur le premier transporteur en défilement (1), et

-une station de mesure de largeur (10),

caractérisée en ce que la station de mesure de largeur (10) comprend un réflecteur (17) disposé perpendiculairement au premier transporteur (1), à la suite de celui-ci, et sous le trajet de la pièce à mesurer (31), une cellule de mesure (16) sensible à la lumière réfléchie par le réflecteur (17) et montée sur un coulisseau (14) déplaçable parallèlement au réflecteur (17) au-dessus du trajet de la pièce à mesurer, un codeur de largeur (100) associé au coulisseau (14) portant la cellule de mesure (16) pour déterminer à chaque instant la position du coulisseau (14) et de la cellule de mesure (16) et des moyens d'inhibition pour n'autoriser la prise en compte des informations émises par le codeur de largeur (100) que lorsque la cellule de mesure (16) détecte une modification de la lumière reçue du réflecteur (17), due à la présence d'une pièce (31) au niveau de la station de mesure de largeur (10), et en ce que le dispositif comprend en outre :

-un second transporteur à bande (2) synchronisé avec le premier transporteur (1) pour évacuer la pièce à mesurer (31) après le passage de celle-ci à la station de mesure de largeur (10),

-un capteur de longueur (20) comprenant un organe (23) de mesure du défilement du premier ou du second transporteur (1,2) et des moyens de commande dudit organe (23) de mesure de défilement pour n'autoriser la prise en compte des informations fournies par l'organe (23) de mesure de défilement que lorsque le passage d'une pièce à mesurer (31) est détecté par ledit détecteur optique de passage (3,4), et

-des moyens (6) d'acquisition et de traitement des informations fournies par le détecteur (3,4) de passage d'une pièce à mesurer, par la cellule de mesure (16), par le codeur de largeur (100) et par le capteur de longueur (20), pour déterminer les dimensions géométriques en largeur et en longueur de la pièce à mesurer (31).

2. Dispositif selon la revendication 1, caractérisé en ce qu'il comprend en outre un capteur optique - (16,62) de mesure d'épaisseur disposé au voisinage de la station (10) de mesure de largeur, transversalement par rapport à la direction de défilement des transporteurs à bande (1,2).

3. Dispositif selon la revendication 1 ou la revendication 2, caractérisé en ce que le coulisseau (14) portant la cellule de mesure (16) est guidé le long d'un rail de guidage (13) perpendiculaire aux transporteurs à bande (1,2) et est entraîné en mouvement à l'aide d'un vérin (15) commandé par le détecteur optique (3,4) de passage, et en ce que le codeur de largeur (100) comprend un codeur incrémental angulaire dont l'arbre de rotation est solidaire d'un pignon en prise avec une crémaillère (18) solidaire du coulisseau (14).

4. Dispositif selon l'une quelconque des revendications 1 à 3, caractérisé en ce que ledit organe (23) de mesure de défilement comprend une roue (24) reposant sur la bande de l'un des transporteurs à bande (1,2) et un codeur incrémental (23) dont l'arbre de rotation est solidaire de ladite roue (24), le codeur (23) et la roue (24) étant supportés par un bras (22) articulé sur une console fixe (21).

5. Dispositif selon l'une quelconque des revendications 1 à 4, caractérisé en ce que les premier et second transporteurs à bande (1,2) comportent une bande commune qui est déviée sous le réflecteur - (17) de la station de mesure de largeur par des rouleaux (41,42,43).

6. Dispositif selon l'une quelconque des revendications 1 à 5, caractérisé en ce que le détecteur optique de passage (3,4) et la cellule de mesure - (16) sont constitués par des cellules photoélectriques.

Fig. 1

0 203 010

# Fig.2

13  15  100  2  18

14  16

17  3

31  5

1

# Fig.7

VI↓

100  181  18  13  14

↓VI

19  15  16

11  3  5

2  17  1

42  43  41  51

44

0 203 010

Fig_5

Fig_3

Fig_4

202
201
21
24
204
2
23
25

22
23
203
201
24
21
2

22
204
201
23
2
24
21

0 203 010

Fig. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 063 820  (RCA) <br> * En entier * | 1-3,5 | G 01 B  11/02 <br> G 01 B  11/04 |
| | --- | | |
| Y | US-A-2 810 316  (GOODYEAR TIRE) <br> * Figure 1; colonne 2, lignes 5-68 * | 1-3,5 | |
| | --- | | |
| A | DE-A-2 927 751  (RÖLLE) <br> * Page 1; revendications 1,2 * | 4 | |
| | --- | | |
| A | US-A-4 152 767  (ATMOSPHERIC SCIENCES) | | |
| | --- | | |
| A | FR-A-2 518 446  (OSA AB) | | |
| | | | **DOMAINES TECHNIQUES RECHERCHES (Int. Cl.4)** |
| | --- | | |
| A | FR-A-2 299 623  (HUTA IM. GEN. K. SWIERCZEWSKIEGO) | | G 01 B |
| | ----- | | |

Le présent rapport de recherche a été établi pour toutes les revendications

| Lieu de la recherche <br> LA HAYE | Date d'achèvement de la recherche <br> 13-08-1986 | Examinateur <br> HOORNAERT W. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82